# EUROPEAN PATENT SPECIFICATION

(11) **EP 3 715 181 B1**
(45) Date of publication and mention of the grant of the patent: **25.01.2023**
(21) Application number: 20165028.0
(22) Date of filing: 23.03.2020
(51) Int. Cl.: B60R 13/10, C08L 101/16

(54) **ENTIRELY BIODEGRADABLE OR RECYCLABLE LICENSE PLATE**
VOLLSTÄNDIG BIOLOGISCH ABBAUBARES ODER RECYCELBARES NUMMERNSCHILD
PLAQUE D'IMMATRICULATION ENTIÈREMENT BIODÉGRADABLE OU RECYCLABLE

(30) Priority: 27.03.2019 ES 201930282
(43) Date of publication of application: 30.09.2020
(73) Proprietor: INDUSTRIAS SAMAR'T, S.A., 17600 Figueres (Gerona) (ES)
(72) Inventor: SANCHEZ CASADEVALL, ENRIQUE, 17600 FIGUERES (ES)
(74) Representative: Munoz Garcia, Antonio

(56) References cited:
- WO-A1-2005/049381
- WO-A1-2007/129949
- GB-A- 2 489 952
- KR-A- 20130 058 899

## Description

### OBJECT OF THE INVENTION

As expressed in the title of the present specification, the invention relates to an entirely biodegradable or recyclable license plate that provides advantages and features, which are described in detail below, representing an improvement in the current state of the art.

More specifically, the object of the invention focuses on a distinctive sign, namely a license plate for vehicles, distinguished in that it is manufactured in its entirety with elements made from biodegradable and/or recyclable materials, whereby advantageously making it an environmentally sustainable product which can be considered suitable for the so-called "circular economy", with the use of a substrate preferably manufactured from biodegradable material, namely a compound obtained from agricultural waste or, alternatively, 100% recyclable aluminum by means of smelting as a supporting base for the plate being of particular relevance.

### FIELD OF APPLICATION OF THE INVENTION

The field of application of the present invention is comprised within the sector of the industry dedicated to manufacturing information signs, particularly license plates for vehicles.

### BACKGROUND OF THE INVENTION

As is known, there is a growing presence of the circular economy, which is a system for the effective harnessing of resources in Europe and seeks to generate an intelligent, sustainable, and integrative growth based on the principle of "closing the life cycle" of products, services, waste, materials, water, and energy.

This harnessing system is committed to using the majority of biodegradable materials so that they can return to nature without causing environmental damage at the end of their service life, and to reusing those elements which, due to their properties, cannot return to the environment, facilitating a simple uncoupling. When possible, they are recycled in an environmentally friendly manner.

The principles of the circular economy are described below:
- Waste becomes a resource: this is the main feature. All the biodegradable material returns to nature and non-biodegradable material is reused.
- Second use: reintroduce in the economic circuit those products that no longer correspond to initial consumers needs.
- Reuse: reuse certain products or parts of those products that still work to elaborate new artifacts.
- Repair: find damaged products a second life.
- Recycle: make use of materials found in waste.
- Valorization: harness energy from waste that cannot be recycled.
- Functionality economy: circular economy aims to eliminate the sale of products in many cases to establish a property rental system. When the product completes its main function it returns to the company, where it is dismantled for reusing the valid parts.
- Energy from renewable sources: elimination of fossil fuels to produce the product, reuse and recycle.
- Eco-design: considers and integrates in its conception the environmental impacts throughout the life cycle of a product.
- Industrial and territorial ecology: establishment of an industrial organizational method in a territory characterized by an optimized management of stocks and flows of materials, energy, and services.

Once the circular economy is established, it should help to reduce the use of resources, reduce waste production, and limit energy consumption.

The objective of the present invention is to provide a product widely used in industry, such as license plates for vehicles, the manufacture of which, in addition to complying with the intended function, at the same time and without prejudice to its effectiveness, presents structural and constitutive features that allow complying with benefits of the circular economy at the end of their service life.

Moreover and in reference to the current state of the art, it must be pointed out that the applicant, at least on its part, is unaware of the existence of any other plate having technical, structural, and constitutive features similar to those which the claimed plate has.

Namely, as one of the closest prior art documents, patent KR20130058899A is known, describing a method of manufacturing vehicles plates using a biodegradable resin through an injection molding process which is composed of a pigment, not paint, basically composed of stearic acid and polylactic acid.

Likewise, document WO 2005/049381 A1, which belongs to the same applicant as the present invention, discloses a license plate made up of a set of superimposed bonded layers based on polymer, adhesive layers, and transparent layers.

WO 2007/129949 A1 discloses license car plates configured from a set of layers superimposed and joined to each other, wherein the various components can be recycled.

However, neither of said documents describes a plate manufactured entirely with elements made from biodegradable and/or recyclable materials, where the substrate is a part made of biodegradable material obtained from agricultural waste.

### DISCLOSURE OF THE INVENTION

The entirely biodegradable or recyclable license plate of the present invention is according to claims 1 to 3.

More specifically, the license plate proposed by the invention, as mentioned above, has the particularity of being manufactured, in its entirety, with elements made from biodegradable and/or recyclable materials, making it an environmentally sustainable product that can be considered suitable for the so-called "circular economy".

To that end, and more specifically, said plate is formed, in a known manner, from a set of superimposed and bonded layers, comprising at least:
- a substrate constituting the lower supporting base;
- a reflective intermediate sheet where the distinctive marks and characters of the license are printed;

- a protective transparent upper sheet, which may occasionally include said characters printed under same;
- and an adhesive film bonding the substrate, the intermediate sheet, and the upper sheet to one another.

The plate of the invention is distinguished from this already known configuration in that:
- said substrate is made of biodegradable material, obtained from agriculatural waste such as rice hull, olive pit, or almond shell, or aluminum and incorporates in the upper part an anti-adherent layer facilitating the separation of same and the intermediate sheet to perform correct recycling of the materials at the end of the service life of the plate;
- the reflective intermediate sheet is a plastic sheet made of a natural cellulose-derived polymer;
- the protective transparent upper sheet is also a plastic sheet made of a natural cellulose-derived polymer;
- and the adhesive bonding the substrate, the intermediate sheet, and the upper sheet to one another is a water-based adhesive that is completely environmentally-friendly, facilitating uncoupling to enable managing the recycling/reuse/biodegradation.

According to a first alternative of the present invention, the substrate is a part made of a biodegradable material a obtained from agricultural waste, for example rice hull, olive pit, or almond shell.

Preferably, the composition of the substrate of biodegradable material is the following:
- 60%-70% biodegradable material (rice hull, olive pit, or almond shell);
- 10% formulated binder;
- 30% PP/PE/or other tough outdoor plastics.

In turn, the anti-adherent layer of its upper surface, which is applied as mentioned above for facilitating the separation of the materials and thus being able to recycle them, preferably has a wax-based, grease-based, or polytetrafluoroethylene-based (PTFE) formulation.

In the preferred embodiment, the design of the plate has a perimeter border assuring its tightness and protection against adverse atmospheric agents and the material of which is the same as that of the substrate: namely a part made of biodegradable material obtained from agricultural waste such as rice hull, olive pit, or almond, or a part made from 100% recyclable aluminum (which is 100% recyclable by means of smelting). This border is preferably determined by a thickening of the substrate and can be wider at the upper and/or lower part to enable incorporating advertising elements. Optionally, the upper or lower portion of the border is formed by a pre-cut independent part or with removable anchor pins.

Optionally, contemplated in the rear part of the substrate is the existence of several support points formed by projections of the same material, which prevent contact between the rear surface of the plate and the vehicle.

Optionally, instead of consisting of a solid body, the substrate is formed by a body that has been lightened based on the existence of hollow spaces. To that end, during the manufacture thereof by injection molding when it is made of biodegradable material, gas can be applied to facilitate obtaining a part with a smaller material mass (by means of gas-assisted injection mold, not to be confused with blow molding). This gas can be nitrogen or carbon dioxide, and it would go through the mold from one side to the other to create these hollow spaces in the substrate. This provides the advantage of reducing the weight, which is one of the biggest demands in the automotive industry: reducing vehicle weight as much as possible as consumption is directly dependent on it. This same process can be carried out with pressurized water.

The substrate will have holes for placing the plate in the vehicle when it is injected (holes will not be made until after the injection), so cycle times are reduced, one and the same manufacturing process is used, and manpower savings are produced.

### DESCRIPTION OF THE DRAWINGS

To complement the description being made and for the purpose of helping to better understand the features of the invention, a set of drawings is attached to the present specification as an integral part thereof, in which the following is depicted in an illustrative and non-limiting manner:
Figure 1 shows a schematic perspective view of a sectioned portion of an embodiment of the license plate object of the invention, depicted with the different elements it comprises in exploded view, arranged by order of placement, where the configuration and arrangement thereof can be seen.
Figure 2 shows a schematic perspective view of a portion of another embodiment of the license plate according to the invention, namely an example with lightened substrate made of biodegradable material, and in this case depicted with its elements once they are assembled.
Figure 3 shows a view similar to that of Figure 2, in this case of another example of the plate with an aluminum substrate.
Figures 4 and 5 show respective perspective views of the portion, once assembled, of the license plate of the invention, with a wide border for advertising at its lower part and with a wide border for advertising at its upper and lower part, respectively.

### PREFERRED EMBODIMENT OF THE INVENTION

In view of the mentioned figures and according to the numbering used, there can be observed therein several embodiments of the entirely biodegradable or recyclable license plate of the invention, which comprises the parts and elements indicated and described in detail below.

Therefore, as can be seen in said figures, the plate (1) in question is configured from a set of superimposed and bonded layers, comprising at least:
- a substrate (2) constituting a lower supporting base part;
- an intermediate sheet (3) which is reflective on its upper face where there are incorporated distinctive logos (4) and, optionally, the characters (5) of the license printed thereon;
- a protective transparent upper sheet (6), which may occasionally include said characters (5) printed in mirrored fashion on its lower face;
- and an adhesive defining the film (not depicted) bonding the substrate (2), the intermediate sheet (3), and the upper sheet (6) to one another.

And based on this already known configuration, the plate (1) has the particularity of being manufactured in its entirety with elements made from biodegradable and/or recyclable materials, such that the substrate (2) is a part made of biodegradable material, obtained from agricultural waste such as rice hull, olive pit, or almond shell, or a part made from 100% recyclable aluminum, further incorporating on its upper surface an anti-adherent layer (7) facilitating its separation from the intermediate sheet (3) at the end of the service life of the plate to perform correct recycling of the materials.

Likewise, the intermediate sheet (3) is a plastic sheet made of a natural cellulose-derived polymer, the upper sheet (6) is also a plastic sheet made of a natural cellulose-derived polymer, and the adhesive bonding the substrate (2), the intermediate sheet (3), and the upper sheet (6) to one another is a water-based adhesive that is completely environmentally-friendly, facilitating uncoupling to enable managing the recycling/reuse/biodegradation.

According to a first alternative of the present invention, the substrate (2) is a part made of biodegradable material obtained from agricultural waste, for example rice hull, olive pit, or almond shell.

Preferably, the composition of said biodegradable material is: 60%-70% biodegradable material obtained from agricultural waste; 10% formulated binder; and 30% PP/PE or other tough outdoor plastics.

The anti-adherent layer (7) of the upper surface of the substrate (2) facilitating the separation of the materials to enable recycling them preferably has a wax-based, grease-based, or polytetrafluoroethylene-based (PTFE) formulation.

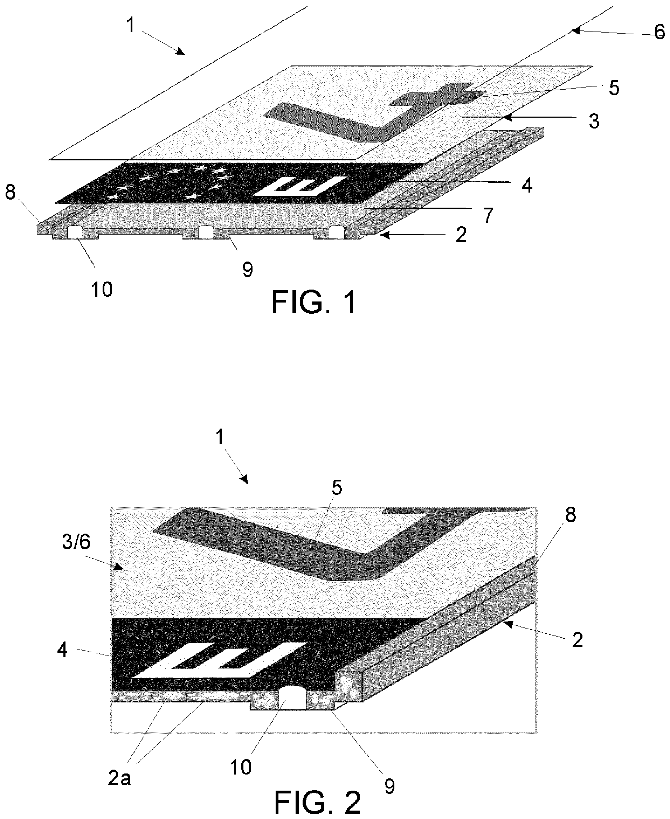

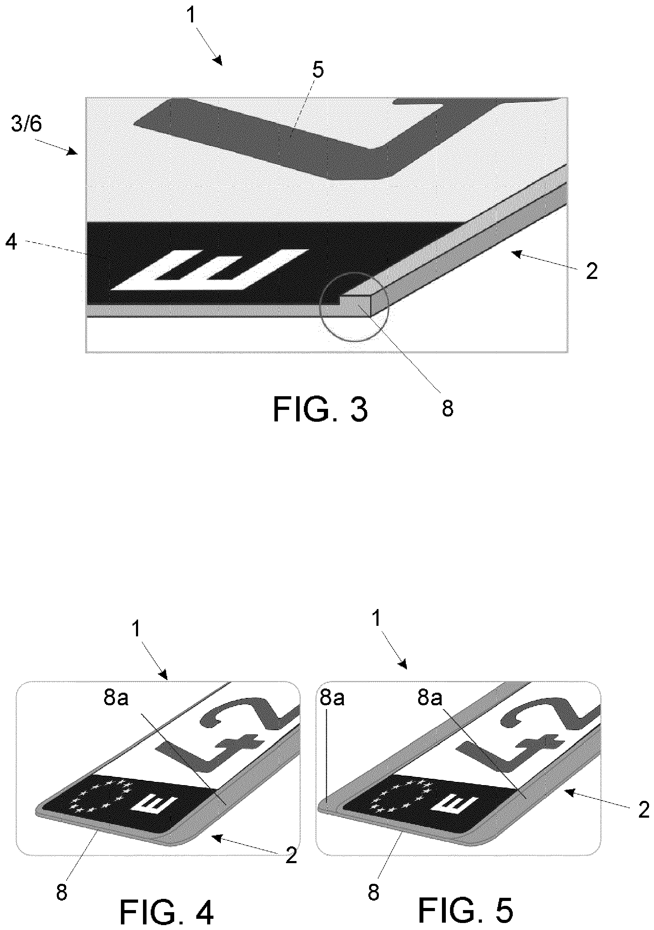

Optionally the plate (1) has a perimeter border (8) made of the same biodegradable material or 100% recyclable aluminum as the substrate (2), which is preferably determined by a thickening of the part constituting said substrate (2), as can be observed in Figures 2 and 3.

Optionally, said perimeter border defines a wider portion (8a) in its upper and/or lower part, as shown in Figures 4 and 5, to enable incorporating advertising elements. Optionally, said upper or lower wider portion (8a) is an independent part of the substrate (2), which is pre-cut or has removable anchor pins, but likewise manufactured from the same material, i.e., biodegradable material or aluminum.

Optionally, in the rear part of the substrate (2) there is provided the existence of several support points (9) which prevent contact between the rear surface of the plate (1) and the vehicle and are made of the same material as the substrate (2), and they are preferably also formed by projections of the part constituting said substrate (2). Furthermore, the substrate is preferably manufactured with the holes (10) therein for fixing same, preferably in the support points (9) themselves.

Optionally, as can be observed in Figure 2, the part constituting the substrate (2) is not a completely solid body and has hollow spaces (2a) for lightening the material. Preferably said hollow spaces of the part of the substrate (2), when it is manufactured with biodegradable material, are obtained during the manufacture of said part by injection molding by applying gas or another fluid to the mold.

Having sufficiently described the nature of the present invention as well as the way of putting it into practice, it is not considered necessary to further describe the invention so that a person skilled in the art can comprehend the scope thereof and the advantages derived from it, where within its essential nature.

## Claims

1. An entirely biodegradable or recyclable license plate configured from a set of superimposed and bonded layers, comprising at least: a substrate (2) constituting a lower supporting base part; an intermediate sheet (3) which is reflective on its upper face where there are incorporated distinctive logos (4) and, optionally, the characters (5) of the license printed thereon; a protective transparent upper sheet (6), which may occasionally include said characters (5) printed in mirrored fashion on its lower face; and an adhesive defining the film bonding the substrate (2), the intermediate sheet (3), and the upper sheet (6) to one another, **characterized in that** it is manufactured in its entirety with elements made from biodegradable and/or recyclable materials; wherein the substrate (2) is a part made of biodegradable material, obtained from agricultural waste such as rice hull, olive pit, or almond shell, or a part made from 100% recyclable aluminum, further incorporating on its upper surface an anti-adherent layer (7) facilitating its separation from the intermediate sheet (3) at the end of the service life of the plate; wherein the intermediate sheet (3) is a plastic sheet made of a natural cellulose-derived polymer; wherein the upper sheet (6) is also a plastic sheet made of a natural cellulose-derived polymer; and wherein the adhesive bonding the substrate (2), the intermediate sheet (3), and the upper sheet (6) to one another is water-based adhesive that is completely environmentally-friendly.

2. The entirely biodegradable or recyclable license plate according to claim 1, **wherein** the part constituting the substrate (2) is not a completely solid body and has hollow spaces (2a) for lightening the material.

3. The entirely biodegradable or recyclable license plate according to claim 1 or 2, **wherein** the anti-adherent layer (7) of the upper surface of the substrate (2) has a wax-based, grease-based, or polytetrafluoroethylene-based formulation.

## Patentansprüche

1. Vollständig biologisch abbaubares oder recycelbares Nummernschild, welches aus einem Satz von aufeinanderliegenden und verbundenen Schichten ausgebildet ist und mindestens Folgendes umfasst: ein Substrat (2), welches ein unteres stützendes Basisteil bildet; eine Zwischenfolie (3), welche auf deren oberen Fläche reflektierend ist, wo charakteristische Logos (4) und, wahlweise, die Charaktere (5) des Nummernschildes darauf gedruckt beinhalten sind; eine durchsichtige obere Schutzfolie (6), welche gelegentlich die genannten Charaktere (5) gespiegelt auf deren unteren Fläche gedruckt enthalten kann; und einen Klebstoff, welcher den Film definiert, welcher das Substrat (2), die Zwischenfolie (3) und die obere Folie (6) miteinander verbindet, **dadurch gekennzeichnet, dass** es ganzheitlich mit Elementen aus biologisch abbaubaren und/oder recycelbaren Materialien gefertigt ist; wobei das Substrat (2) ein Teil aus biologisch abbaubarem Material ist, welches aus landwirtschaftlichem Abfall wie Reishülse, Olivenkern oder Mandelschale erhalten wird, oder ein Teil aus 100% recycelbarem Aluminium ist, welches zusätzlich auf seiner oberen Oberfläche eine Antihaftschicht (7) beinhaltet, welche dessen Trennung von der Zwischenfolie (3) am Ende der Lebensdauer des Nummernschildes erleichtert; wobei die Zwischenfolie (3) eine Kunststofffolie aus einem natürlichen, von Cellulose abgeleiteten Polymer ist; wobei die obere Folie (6) auch eine Kunststofffolie aus einem natürlichen, von Cellulose abgeleiteten Polymer ist; und wobei der Klebstoff, welcher das Substrat (2), die Zwischenfolie (3) und die obere Folie (6) miteinander verbindet, ein Klebstoff auf Wasserbasis ist, welcher völlig umweltfreundlich ist.

2. Vollständig biologisch abbaubares oder recycelbares Nummernschild nach Anspruch 1, wobei das Teil, welches das Substrat (2) bildet, kein völlig massiver Körper ist und Hohlräume (2a) aufweist, um das Material leichter zu machen

3. Vollständig biologisch abbaubares oder recycelbares Nummernschild nach Anspruch 1 oder 2, wobei die Antihaftschicht (7) der oberen Oberfläche des Substrats (2) eine Formulierung auf Wachsbasis, auf Fettbasis oder auf Polytetrafluorethylenbasis aufweist.

## Revendications

1. Plaque d'immatriculation entièrement biodégradable ou recyclable, configurée à partir d'un ensemble de couches superposées et liées entre elles, comprenant au moins : un substrat (2) constituant une partie de base de support inférieur ; une feuille intermédiaire (3) qui est réfléchissante sur sa face supérieure où sont incorporés des logos distinctifs (4) et, optionnellement, les caractères (5) de l'immatriculation imprimés sur celle-ci ; une feuille transparente supérieure de protection (6), qui occasionnellement peut inclure lesdits caractères (5) imprimés en image en miroir sur sa face inférieure ; et un adhésif définissant la pellicule liant le substrat (2), la feuille intermédiaire (3) et la feuille supérieure (6) les uns aux autres, **caractérisée en ce qu'**elle est fabriquée dans son intégralité avec des éléments faits à partir de matériaux biodégradables et/ou recyclables ; dans laquelle le substrat (2) est une partie faite d'un matériau biodégradable, obtenu à partir de résidus agricoles tels que gousses de riz, noyaux d'olive ou coquilles d'amande, ou une partie faite à partir de 100% d'aluminium recyclable qui incorpore de plus sur sa surface supérieure une couche anti-adhérente (7) facilitant sa séparation de la feuille intermédiaire (3) à la fin de la vie utile de la plaque ; dans laquelle la feuille intermédiaire (3) est une feuille en plastique faite d'un polymère naturel dérivé de la cellulose ; dans laquelle la feuille supérieure (6) est aussi une feuille en plastique faite d'un polymère naturel dérivé de la cellulose ; et dans laquelle l'adhésif liant le substrat (2), la feuille intermédiaire (3) et la feuille supérieure (6) les uns aux autres est un adhésif à base d'eau qui est totalement respectueux de l'environnement.

2. Plaque d'immatriculation entièrement biodégradable ou recyclable, selon la revendication 1, **dans laquelle** la partie constituant le substrat (2) n'est pas un corps complètement massif et a des espaces creux (2a) pour l'allègement du matériau.

3. Plaque d'immatriculation entièrement biodégradable ou recyclable, selon la revendication 1 ou 2, **dans laquelle** la couche anti-adhérente (7) de la surface supérieure du substrat (2) a une formule à base de cire, à base de graisse ou à base de polytétrafluoroéthylène.
